# FASCICULE DE BREVET EUROPEEN

(11) **EP 1 610 510 B1**
(45) Date de publication et mention de la délivrance du brevet: **14.02.2007**
(21) Numéro de dépôt: 05291270.6
(22) Date de dépôt: 13.06.2005
(51) Int. Cl.: H04L 12/56, H04Q 7/32

(54) **Contrôle d'accès sans fil à des services télématiques et vocaux**
Drahtlose Zugangskontrolle für Telematik- und Sprachdienste
Wireless access control to telematics and voice services

(30) Priorité: 24.06.2004 FR 0406922
(43) Date de publication de la demande: 28.12.2005
(73) Titulaire: FRANCE TELECOM, 75015 Paris (FR)
(72) Inventeur: Michel, Philippe, 14000 Caen (FR); Courtemanche, Bernard, 14000 Caen (FR); Marie, Francois, 50700 Valognes (FR)
(74) Mandataire: Bentz, Jean-Paul

(56) Documents cités:
- WO-A-20/04036856
- BLUETOOTH SPECIAL INTEREST GROUP: "SIM access profile, interoperability specification"[Online] 6 juin 2002 (2002-06-06), pages 1-50, XP002314566 Extrait de l'Internet: URL:www.bluetooth.org> [extrait le 2005-01-21]
- "SPECIFICATION OF THE BLUETOOTH SYSTEM, PROFILES, VERSION 1.0 B, SERVICE DISCOVERY APPLICATION PROFILE" BLUETOOTH SPECIFICATION, 1 décembre 1999 (1999-12-01), XP002176976

## Description

La présente invention concerne la gestion d'accès à des services télématiques et vocaux.

Elle s'applique notamment, mais non exclusivement aux accès à de tels services effectués par l'intermédiaire d'un réseau de téléphonie mobile, tel que GSM / GPRS (Global System for Mobile communications / General Packet Radio Service).

Dans le domaine de l'automobile, il existe des dispositifs de communication embarqués, couramment appelés "car kit", offrant une fonction "mains libres" qui permet de numéroter et de téléphoner sans avoir à manipuler le téléphone mobile. Ces dispositifs fonctionnent généralement couplés à un téléphone mobile qui est à cet effet posé dans un support appelé "sabot" ou "socle". Certains de ces dispositifs peuvent également intégrer un téléphone mobile.

Ces dispositifs peuvent être répartis en deux catégories. Dans la première catégorie, le dispositif est constitué par un ordinateur embarqué capable de gérer un téléphone mobile, des hauts-parleurs, un microphone et d'autres équipements du véhicule. Les dispositifs de cette catégorie sont plutôt destinés au grand public du fait qu'ils sont prévus pour se connecter au téléphone mobile habituel de l'utilisateur. Une fois que le téléphone est posé sur le support du dispositif, l'utilisateur peut activer la fonction "mains libres" du dispositif qui intègre des fonctions de reconnaissance vocale permettant de reconnaître certains mots comme "téléphone" émis par l'utilisateur et captés par le microphone du dispositif. Dans cette catégorie, le téléphone mobile de l'utilisateur est toujours utilisé pour accéder à un réseau de téléphonie extérieur. Les dispositifs appartenant à cette catégorie présentent donc l'avantage de ne pas être équipés de matériel de télécommunication.

Si le téléphone mobile est équipé d'une carte SIM (Subscriber Identity Module), l'utilisateur doit introduire un code personnel appelé "code PIN", que la carte SIM vérifie. Si le code introduit est correct, l'utilisateur peut accéder au réseau de téléphonie.

Dans la seconde catégorie, le dispositif est également constitué par un ordinateur embarqué, mais possède son propre équipement téléphonique comportant un modem relié à une antenne externe. L'équipement téléphonique doit être équipé d'une carte SIM, et donc son propriétaire doit être titulaire d'un abonnement téléphonique spécifique. Les dispositifs de cette catégorie sont donc plutôt destinés à des fins professionnelles. Ils présentent en outre l'avantage de bénéficier d'une antenne externe offrant un meilleur gain que l'antenne d'un téléphone mobile.

Par ailleurs, certains de ces dispositifs mettent en oeuvre ce que l'on appelle un "profil Bluetooth" appelé "SIM Access Profile" (SAP) regroupant un ensemble de fonctions offrant la possibilité aux utilisateurs d'utiliser la carte SIM de leur téléphone mobile sans avoir à placer celui-ci sur le support du dispositif. Ce profil Bluetooth permet de dissocier l'équipement téléphonique de la carte SIM qui peut être dans le téléphone mobile ou dans un lecteur de carte du dispositif, le lien entre l'équipement téléphonique et la carte SIM étant assuré par une liaison Bluetooth. Dans le cas de la seconde catégorie, cette fonctionnalité évite l'utilisation d'une carte SIM spécifique, tout en utilisant l'antenne externe dont est équipé le véhicule.

Certains dispositifs de communication (car kit) permettent en outre de mettre en communication un équipement de type PC (assistant électronique personnel) muni d'un moyen de communication de type Bluetooth à des services télématiques ou vocaux accessibles par le réseau mobile, le paiement de ces services étant effectué par le titulaire de la carte SIM placée dans le dispositif de communication ou en communication avec celui-ci par le SAP.

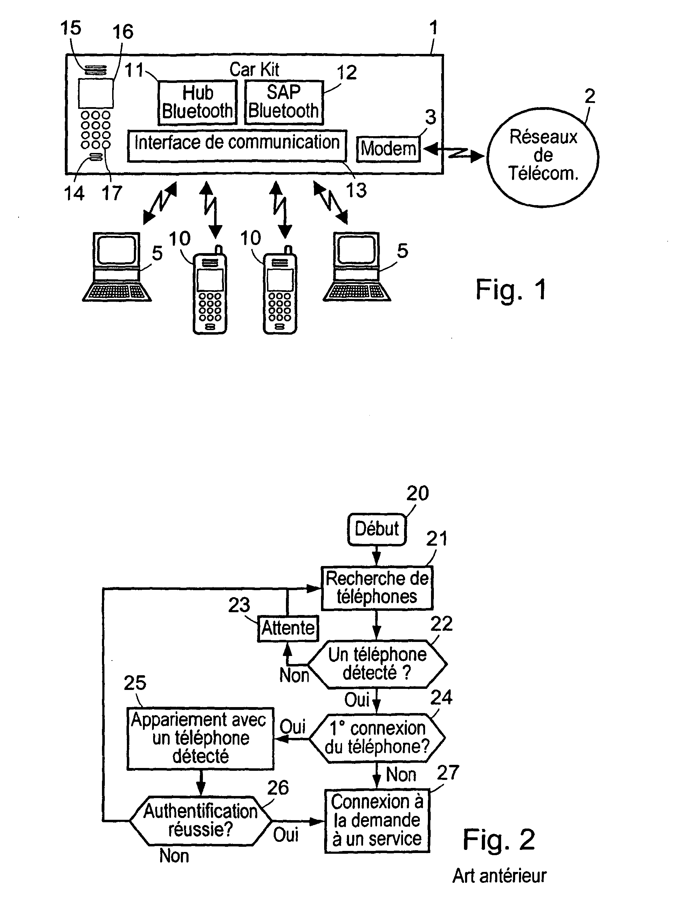

Le fonctionnement d'un tel dispositif de communication est illustré par la figure 2. A l'activation du dispositif de communication, par exemple lors de l'insertion de la clé de contact du véhicule, le dispositif exécute la procédure 20 représentée sur cette figure. A la première étape 21 de cette procédure, le dispositif de communication scrute l'environnement radio pour détecter des équipements équipés d'une interface Bluetooth. A l'étape suivante 22, si aucun équipement n'est détecté, le dispositif revient à l'étape précédente en passant éventuellement par une étape intermédiaire 23 d'attente. Si un ou plusieurs équipements sont détectés, et si parmi ces équipements se trouve un ou plusieurs téléphones mobiles, il en choisit un arbitrairement en donnant la préférence à un téléphone mobile avec lequel il a déjà été connecté.

Si à l'étape 24, le téléphone choisi se connecte pour la première fois au dispositif, celui-ci exécute une procédure d'appariement Bluetooth (étape 25). Cette procédure met en oeuvre un mécanisme d'authentification du téléphone basé sur l'introduction par l'utilisateur d'un code secret commun, appelé code PIN Bluetooth, partagé par le téléphone et le dispositif. En cas de succès de la procédure d'appariement, une connexion Bluetooth est établie entre le dispositif et le téléphone. Si à l'étape 24, le téléphone choisi ne se connecte pas pour la première fois, un mécanisme d'authentification automatique (sans intervention de l'utilisateur) basé sur l'utilisation d'une clé de session obtenue lors de la session précédente est mis en oeuvre avant l'établissement de la connexion.

Si l'authentification du téléphone a réussi (étape 26), le dispositif de communication établit une connexion avec le réseau de téléphonie mobile en utilisant la carte SIM de ce téléphone. Ensuite, d'autres équipements, tels que des équipements de type PC ou PDA peuvent se connecter au dispositif par l'intermédiaire d'une liaison Bluetooth ou filaire pour utiliser la connexion ainsi établie avec le réseau de téléphonie, afin d'accéder à des services vocaux ou de fourniture d'informations, offerts par le réseau de téléphonie, ces services étant ensuite facturés à l'utilisateur propriétaire du téléphone appairé avec le dispositif de communication.

Dans le cas, où le dispositif de communication détecte plusieurs téléphones mobiles équipés d'un profil SAP, il choisit arbitrairement le premier téléphone reconnu, ce qui pose un problème car l'utilisateur qui a été choisi par le dispositif n'est pas nécessairement celui qui souhaite payer l'accès aux services. En d'autres termes, il n'est pas possible de choisir quel téléphone mobile doit être appairé au dispositif. Il n'est également pas possible de refuser à un ou plusieurs équipements de type PC ou PDA d'accéder à des services télématiques ou vocaux une fois que la connexion avec le réseau de téléphonie est établie.

De plus, si la sécurité du téléphone choisi par le dispositif de communication a été désactivée, le propriétaire du téléphone mobile peut ne pas être informé qu'il payera l'accès à des services offerts par le réseau.

Actuellement la protection Bluetooth entre le dispositif de communication et les équipements de type PC ou PDA est rarement activée ou mise en oeuvre de manière efficace. En effet, le code PIN Bluetooth du dispositif de communication est souvent choisi de manière simpliste par exemple "1234" pour des raisons de mémorisation. Il existe donc des risques importants qu'une personne indésirable accède à des services du réseau en passant par le dispositif de communication à l'insu de son propriétaire, et donc en faisant payer l'accès à ce dernier. En outre, si le fraudeur a réussi à se connecter une fois, il n'aura plus à introduire de code PIN Bluetooth les fois suivantes puisque son équipement aura été mémorisé comme ayant déjà été connecté.

Le document Bluetooth Special Interest Group "SIM Access Profile, Interoperability Specification", 6 juin 2002 décrit un procédé selon le préambule de la revendication 1, dans lequel un dispositif de communication accède à un réseau de téléphonie mobile en utilisant les données d'authentification d'un terminal, en utilisant un lien bluetooth (voir par exemple figure 2-2).

La présente invention a pour but de supprimer ces inconvénients. Cet objectif est atteint par la prévision d'un procédé de gestion d'accès à des services télématiques ou vocaux par l'intermédiaire d'un réseau de téléphonie mobile, comprenant des étapes au cours desquelles :
- un dispositif de communication muni de moyens de communication sans fil détecte à portée radio des terminaux de communication équipés de moyens d'authentification pour se connecter à un réseau de téléphonie mobile,
- le dispositif de communication établit une communication sans fil avec un terminal de communication et utilise des moyens d'authentification du terminal de communication pour établir une connexion avec le réseau de téléphonie mobile, et
- au moins un terminal accède à des services télématiques ou vocaux par l'intermédiaire du dispositif de communication et de la connexion établie par celui-ci avec le réseau de téléphonie mobile.

Selon l'invention, ce procédé comprend en outre des étapes au cours desquelles :
- le dispositif de communication sélectionne un terminal de communication à utiliser pour accéder au réseau de téléphonie mobile, en interrogeant l'utilisateur du terminal de communication sélectionné, et
- le dispositif de communication détermine en interrogeant l'utilisateur du terminal de communication sélectionné si le terminal est autorisé à accéder aux services télématiques ou vocaux, et refuse l'accès aux services télématiques ou vocaux si le terminal n'est pas autorisé.

Selon un mode préféré de réalisation de l'invention, le dispositif de communication fournit une liste d'identifiants des terminaux détectés à portée radio, indiquant quels sont les terminaux équipés de moyens d'authentification pour se connecter au réseau de téléphonie mobile, pour permettre à l'utilisateur de sélectionner un terminal dont les moyens d'authentification sont à utiliser pour se connecter au réseau de téléphonie mobile.

Avantageusement, la liste d'identifiants de terminaux détectés à portée radio est utilisée pour permettre à l'utilisateur du terminal de communication utilisé pour accéder au réseau de téléphonie mobile de sélectionner au moins un terminal autorisé à accéder aux services télématiques ou vocaux par l'intermédiaire de la connexion établie avec le réseau de téléphonie mobile.

Selon un autre mode préféré de réalisation de l'invention, plusieurs terminaux accèdent simultanément à des services télématiques ou vocaux par l'intermédiaire d'un concentrateur prévu dans le dispositif de communication et de la connexion établie par celui-ci avec le réseau de téléphonie mobile.

Selon un autre mode préféré de réalisation de l'invention, la connexion entre le dispositif de communication et le réseau de téléphonie mobile est maintenue tant qu'une communication sans fil est établie entre le terminal de communication et le dispositif de communication.

Selon un autre mode préféré de réalisation de l'invention, ce procédé comprend en outre une étape d'appariement exécutée si le terminal de communication n'a jamais été appairé avec le dispositif de communication, et une étape d'authentification automatique faisant intervenir un numéro de session obtenu lors d'une connexion précédente, si le terminal de communication a déjà été appairé avec le dispositif de communication.

L'invention concerne également un dispositif de communication pour gérer l'accès à des services télématiques ou vocaux par l'intermédiaire d'un réseau de téléphonie mobile, le dispositif de communication comprenant :
- des moyens de communication sans fil associés à des moyens pour détecter à portée radio des terminaux de communication équipés de moyens d'authentification pour se connecter à un réseau de téléphonie mobile,
- des moyens pour établir une communication sans fil avec un terminal de communication, et
- des moyens pour établir une connexion avec le réseau de téléphonie mobile en utilisant les moyens d'authentification du terminal de communication avec lequel une connexion sans fil est établie, et
- des moyens pour établir simultanément une communication sans fil avec un terminal afin de lui donner accès à des services télématiques ou vocaux par l'intermédiaire de la connexion établie avec le réseau de téléphonie mobile.

Selon l'invention, ce dispositif de communication comprend en outre :
- des moyens pour déterminer un terminal de communication à utiliser pour accéder au réseau de téléphonie mobile, en interrogeant l'utilisateur du terminal de communication utilisé pour accéder au réseau de téléphonie mobile, et
- des moyens pour déterminer en interrogeant l'utilisateur du terminal de communication si le terminal est autorisé à accéder aux services télématiques ou vocaux, et pour refuser l'accès aux services télématiques ou vocaux si le terminal n'est pas autorisé.

Selon un mode préféré de réalisation de l'invention, ce dispositif de communication comprend en outre un concentrateur pour établir simultanément une communication avec plusieurs terminaux afin de leur donner accès à des services télématiques ou vocaux par l'intermédiaire de la connexion établie avec le réseau de téléphonie mobile.

Selon un mode préféré de réalisation de l'invention, ce dispositif de communication comprend en outre un afficheur pour afficher la liste des terminaux détectés à portée radio, et déterminer pour chaque terminal détecté s'il est équipé de moyens d'authentification pour accéder au réseau de téléphonie mobile.

L'invention concerne en outre un programme d'ordinateur apte à être exécuté par un dispositif de communication muni de moyens de communication sans fil et de moyens pour se connecter à un réseau de téléphonie mobile, ce programme mettant en oeuvre le procédé défini ci-avant.

Un mode de réalisation préféré de l'invention sera décrit ci-après, à titre d'exemple non limitatif, avec référence aux dessins annexés dans lesquels :
La figure 1 représente un système d'accès à des services télématiques et vocaux incluant le dispositif selon l'invention ;
La figure 2 illustre sous la forme d'un organigramme un procédé d'accès à des services télématiques et vocaux selon l'art antérieur ;
La figure 3 illustre sous la forme d'un organigramme un procédé d'accès à des services télématiques et vocaux selon l'invention.

La figure 1 représente un système de gestion d'accès à des services télématiques et/ou vocaux par l'intermédiaire d'un réseau de télécommunication mobile 2, par exemple du type GPS/GPRS.

Ce système comprend un dispositif de communication 1 ou "car kit" destiné par exemple à être installé à bord d'un véhicule. Ce dispositif comprend un modem 3 permettant d'établir des communications avec le réseau de télécommunication 2, et une interface de communication 13 sans fil par exemple de type Bluetooth, permettant d'établir une communication avec un terminal 5, 10 équipé d'une interface analogue.

Le dispositif de communication 1 comprend en outre un module 12 constitué dans le cas de Bluetooth d'un profil radio Bluetooth appelé SAP (SIM Access Profile) permettant notamment d'accéder à la carte SIM d'un terminal mobile 10 avec lequel une liaison de communication sans fil est établie pour accéder au réseau de télécommunication 2.

Le dispositif de communication 1 comprend également une interface vocale 14, 15 permettant à l'utilisateur d'introduire vocalement des commandes et de recevoir des messages vocaux du dispositif. Alternativement ou en combinaison, le dispositif de communication peut également comprendre un afficheur 16 et un clavier de commande 17.

Selon l'invention, le dispositif de communication sans fil 1 comprend en outre un concentrateur 11 (Hub) permettant d'établir simultanément plusieurs liaisons sans fil avec des terminaux 5 situés à proximité, de manière à leur permettre de communiquer avec le réseau de télécommunication 2 par l'intermédiaire du modem 3 et de l'interface de communication 13.

Ce système est particulièrement conçu pour gérer le contrôle d'accès à des services télématiques ou vocaux payants accessibles par le réseau de télécommunication 2, via l'interface de communication 13.

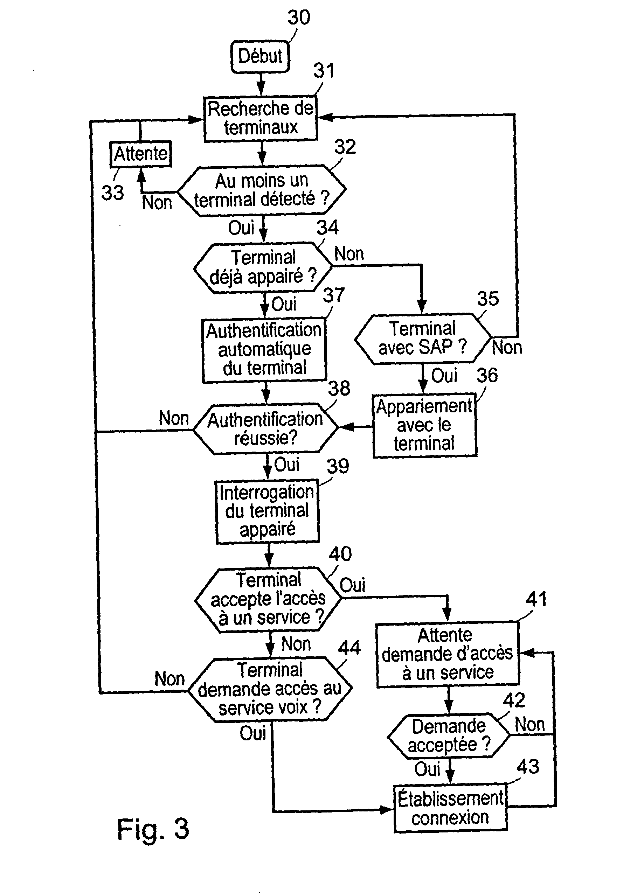

Selon l'invention, pour gérer le contrôle d'accès à de tels services, le dispositif de communication 1 exécute la procédure 30 illustrée sur la figure 3. Sur cette figure, le dispositif de communication qui n'est alors pas connecté au réseau 2, scrute en permanence si des terminaux 5, 10 équipés d'une interface de communication sans fil sont à portée de communication (étape 31). A cet effet, dans le cas de la norme Bluetooth, il envoie périodiquement un message de recherche, et récupère éventuellement les identifiants de terminaux répondant au message de recherche.

A l'étape 32, le dispositif de communication reçoit les éventuels messages de réponse contenant un identifiant de terminal et dans certains cas le type du terminal. Le type de terminal est toujours fourni si celui-ci est un téléphone mobile (intégrant une carte SIM).
Si à l'étape 32, le dispositif de communication ne détecte pas la présence d'un terminal de type possédant une carte SIM, il se met en attente pendant une durée prédéfinie ou à la suite d'une commande de déclenchement de l'utilisateur (étape 33), avant de revenir à l'étape 31 pour émettre un nouveau message de recherche.

Pendant la phase d'attente, un terminal arrivant à portée radio du dispositif de communication peut également émettre un message pour signaler sa présence. Dans ce cas, ce message est reçu et analysé par le dispositif de communication qui exécute la procédure à partir de l'étape 34 décrite ci-après.

Si à l'étape 32, un terminal 10 détecté possède une carte SIM, le dispositif de communication passe à l'étape suivante 34, où il détermine si le terminal détecté a déjà été appairé, à l'aide d'une liste mémorisée de terminaux déjà appairés. Si le terminal n'a jamais été appairé, il lui envoie à l'étape 35 un message pour lui demander s'il est équipé d'un profil SAP. Si la réponse du terminal indique qu'il est équipé d'un profil SAP, le dispositif exécute une étape 36 d'appariement avec le terminal, mettant en oeuvre un mécanisme d'authentification du propriétaire du terminal, impliquant la saisie par l'utilisateur du code PIN Bluetooth. Le dispositif 1 mémorise ensuite une clé de session calculée à partir du code PIN introduit par le propriétaire du terminal, en vue de l'établissement d'une connexion ultérieure. A chaque nouvelle authentification, une nouvelle clé de session est générée à partir de la précédente et mémorisée à la place de cette dernière.

A la fin de cette procédure d'appariement/authentification, le propriétaire du terminal peut être invité à saisir le code PIN de la carte SIM si cette sécurité est active.

Si à l'étape 34, le terminal détecté a déjà été appairé, le dispositif exécute une procédure d'authentification automatique 37 ne faisant pas intervenir l'utilisateur du terminal, basée sur l'utilisation de la clé de session obtenue lors d'une connexion précédente, et à l'issue de laquelle une nouvelle clé de session est fournie par le dispositif au terminal en vue d'une connexion ultérieure.

Si à l'étape suivante 38, l'authentification du terminal effectuée à l'étape 36 ou 37 a réussi, le dispositif de communication passe à l'étape 39 où il interroge vocalement ou sur un afficheur 16 le propriétaire du terminal ainsi authentifié pour lui demander s'il accepte de payer l'accès aux services télématiques payants. Ce message d'interrogation est affiché ou restitué vocalement par le dispositif. Ensuite, le dispositif de communication se met en attente d'un message de réponse qui peut être fourni vocalement ou à l'aide d'un bouton de commande 17 prévu à cet effet (étape 40). Si le dispositif 1 ne reçoit aucune réponse dans un certain délai, il reprend la phase de recherche d'un terminal à partir de l'étape 31. Si le dispositif reçoit une réponse négative, il interroge de la même façon le propriétaire du terminal authentifié pour lui demander s'il souhaite accéder au service "voix" du réseau 2, de manière à bénéficier de l'antenne extérieure du véhicule (étape 44). Si la réponse du propriétaire est négative ou si aucune réponse n'est reçue dans un certain délai, il reprend la phase de recherche d'un terminal à partir de l'étape 31. Dans le cas contraire, le dispositif de communication établit une connexion avec le service "voix" du réseau 2 (étape 43).

Si à l'étape 40, le propriétaire est d'accord pour que sa carte SIM soit utilisée pour accéder à des services payants, le dispositif 1 cherche à détecter dans son environnement si des terminaux (de type PC, PDA, ...) 5 compatibles avec les services télématiques, tentent d'accéder à des services télématiques ou vocaux (étape 41). Si tel est le cas, il interroge (vocalement ou par affichage) le propriétaire du terminal 10 ayant accepté que sa carte SIM soit utilisée pour accéder à des services payants utilisé, pour savoir s'il est d'accord pour que le terminal 5 de type PC détecté accède à un tel service (étape 42). Si la réponse du propriétaire est positive, le dispositif établit la connexion avec le réseau 2 (étape 43), sinon l'accès au service est refusé. Dans ces deux cas, le dispositif 1 reprend la procédure à l'étape 41 pour rechercher d'autres terminaux 5 souhaitant accéder à un service télématique payant offert par le réseau 2.

Grâce au concentrateur 11 plusieurs terminaux 5 peuvent ainsi accéder simultanément à des services télématiques ou vocaux offerts par le réseau 2.

La connexion avec le réseau de télécommunication 2 est effectuée en faisant intervenir la carte SIM du terminal 10 du propriétaire ayant accepté l'accès, par l'intermédiaire du profil SAP 12. La connexion avec le réseau 2 est ainsi établie par le dispositif 1 comme s'il s'agissait du terminal intégrant la carte SIM utilisée.

Si le terminal 10 utilisé pour établir une connexion du dispositif de communication 1 avec le réseau 2 interrompt la liaison sans fil avec le dispositif 1 (fermeture de la session Bluetooth), ie dispositif 1 interrompt la connexion avec le réseau 2, ce qui ferme les accès aux services en cours par les terminaux 5 connectés.

Dans une variante selon l'invention, pendant la phase de scrutation de l'environnement Bluetooth, tous les terminaux 5, 10 détectés sont présentés sur l'afficheur 16 dans une liste précisant pour chaque terminal si le terminal dispose d'une carte SIM et s'il a déjà été appairé avec le dispositif de communication 1. L'utilisateur est ensuite invité à sélectionner dans la liste affichée le terminal 10 à utiliser pour accéder au réseau 2 et le ou les terminaux 5 autorisés ensuite à accéder aux services télématiques ou vocaux payants par l'intermédiaire du concentrateur 11 et du modem 3.

En parallèle, le dispositif de communication 1 poursuit la scrutation de son environnement radio pour détecter la présence d'éventuels autres terminaux 5, afin de compléter la liste, et pour offrir à l'utilisateur la possibilité d'accepter la connexion de ces autres terminaux.

Bien entendu, d'autres moyens de communication sans fil (courte portée) peuvent être envisagés sans sortir du cadre de la présente invention. On peut ainsi remplacer le protocole Bluetooth par d'autres protocoles tels que WiFi.

## Revendications

1. Procédé de gestion d'accès à des services télématiques ou vocaux par l'intermédiaire d'un réseau de téléphonie mobile (2), comprenant des étapes au cours desquelles :
- un dispositif de communication (1) muni de moyens de communication sans fil détecte à portée radio des terminaux de communication (10) équipés de moyens d'authentification pour se connecter à un réseau de téléphonie mobile (2),
- le dispositif de communication établit une communication sans fil avec un terminal de communication (10) et utilise des moyens d'authentification du terminal de communication pour établir une connexion avec le réseau de téléphonie mobile, et
- au moins un terminal (5) accède à des services télématiques ou vocaux par l'intermédiaire du dispositif de communication et de la connexion établie par celui-ci avec le réseau de téléphonie mobile,
**caractérisé en ce qu**'il comprend en outre des étapes au cours desquelles :
- le dispositif de communication (1) sélectionne un terminal de communication (10) à utiliser pour accéder au réseau de téléphonie mobile, en interrogeant l'utilisateur du terminal de communication sélectionné, et
- le dispositif de communication détermine en interrogeant l'utilisateur du terminal de communication si le terminal (5) est autorisé à accéder aux services télématiques ou vocaux, et refuse l'accès aux services télématiques ou vocaux si le terminal n'est pas autorisé.

2. Procédé selon la revendication 1,
**caractérisé en ce que** le dispositif de communication (1) fournit une liste d'identifiants des terminaux (5, 10) détectés à portée radio, indiquant quels sont les terminaux (10) équipés de moyens d'authentification pour se connecter au réseau de téléphonie mobile (2), pour permettre à l'utilisateur de sélectionner un terminal (10) dont les moyens d'authentification sont à utiliser pour se connecter au réseau de téléphonie mobile.

3. Procédé selon la revendication 2,
**caractérisé en ce que** la liste d'identifiants de terminaux (5, 10) détectés à portée radio est utilisée pour permettre à l'utilisateur du terminal de communication utilisé pour accéder au réseau de téléphonie mobile (2) de sélectionner au moins un terminal (5) autorisé à accéder aux services télématiques ou vocaux par l'intermédiaire de la connexion établie avec le réseau de téléphonie mobile.

4. Procédé selon l'une des revendications 1 à 3,
**caractérisé en ce que** plusieurs terminaux (5) accèdent simultanément à des services télématiques ou vocaux par l'intermédiaire d'un concentrateur (11) prévu dans le dispositif de communication (1) et de la connexion établie par celui-ci avec le réseau de téléphonie mobile (2).

5. Procédé selon l'une des revendications 1 à 4,
**caractérisé en ce que** la connexion entre le dispositif de communication (1) et le réseau de téléphonie mobile (2) est maintenue tant qu'une communication sans fil est établie entre le terminal de communication (10) et le dispositif de communication (1).

6. Procédé selon l'une des revendications 1 à 5,
**caractérisé en ce qu**'il comprend une étape d'appariement exécutée si le terminal de communication (10) n'a jamais été appairé avec le dispositif de communication (1), et une étape d'authentification automatique faisant intervenir un numéro de session obtenu lors d'une connexion précédente, si le terminal de communication a déjà été appairé avec le dispositif de communication (1).

7. Dispositif de communication (1) pour gérer l'accès à des services télématiques ou vocaux par l'intermédiaire d'un réseau de téléphonie mobile (2), le dispositif de communication comprenant :
- des moyens de communication sans fil associés à des moyens pour détecter à portée radio des terminaux de communication (10) équipés de moyens d'authentification pour se connecter à un réseau de téléphonie mobile (2),
- des moyens pour établir une communication sans fil avec un terminal de communication (10), et
- des moyens pour établir une connexion avec le réseau de téléphonie mobile en utilisant les moyens d'authentification du terminal de communication avec lequel une connexion sans fil est établie, et
- des moyens pour établir simultanément une communication sans fil avec un terminal (5) afin de lui donner accès à des services télématiques ou vocaux par l'intermédiaire de la connexion établie avec le réseau de téléphonie mobile,
**caractérisé en ce qu**'il comprend en outre :
- des moyens pour déterminer un terminal de communication (10) à utiliser pour accéder au réseau de téléphonie mobile (2), en interrogeant l'utilisateur du terminal de communication utilisé pour accéder au réseau de téléphonie mobile (2), et
- des moyens pour déterminer en interrogeant l'utilisateur du terminal de communication (10) si le terminal (5) est autorisé à accéder aux services télématiques ou vocaux, et pour refuser l'accès aux services télématiques ou vocaux si le terminal n'est pas autorisé.

8. Dispositif selon la revendication 7,
**caractérisé en ce qu**'il comprend un concentrateur (11) pour établir simultanément une communication avec plusieurs terminaux (5) afin de leur donner accès à des services télématiques ou vocaux par l'intermédiaire de la connexion établie avec le réseau de téléphonie mobile (2).

9. Dispositif selon l'une des revendications 7 à 8,
**caractérisé en ce qu**'il comprend un afficheur (16) pour afficher la liste des terminaux (5, 10) détectés à portée radio, et déterminer pour chaque terminal détecté s'il est équipé de moyens d'authentification pour accéder au réseau de téléphonie mobile (2).

10. Programme d'ordinateur apte à être exécuté par un dispositif de communication (1) muni de moyens de communication sans fil et de moyens pour se connecter à un réseau de téléphonie mobile (2),
**caractérisé en ce qu**'il met en oeuvre le procédé selon l'une des revendications 1 à 6.

## Claims

1. Method for managing access to voice or telematics services via a mobile telephony network (2), comprising the steps during which:
- a communication device (1) provided with wireless communication means detects within radio range communication terminals (10) equipped with authentication means to connect to a mobile telephony network (2),
- the communication device sets up a wireless communication with a communication terminal (10) and uses means of authentication of the communication terminal to set up a connection with the mobile telephony network, and
- at least one terminal (5) accesses voice or telematics services via the communication device and the connection set up by the latter with the mobile telephony network,
**characterized in that** it further comprises the steps during which:
- the communication device (1) selects a communication terminal (10) to be used to access the mobile telephony network, by polling the user of the communication terminal, and
- the communication device determines, by polling the user of the communication terminal, whether the terminal (5) is authorized to access the voice or telematics services, and refuses access to the voice or telematics services if the terminal is not authorized.

2. Method according to Claim 1, **characterized in that** the communication device (1) provides a list of identifiers of the terminals (5, 10) detected within radio range, indicating which terminals (10) are equipped with authentication means to connect to the mobile telephony network (2) to enable the user to select a terminal (10) whose authentication means are to be used to connect to the mobile telephony network.

3. Method according to Claim 2, **characterized in that** the list of identifiers of terminals (5, 10) detected within radio range is used to allow the user of the communication terminal being used to access the mobile telephony network (2) to select at least one terminal (5) authorized to access the voice or telematics services through the connection set up with the mobile telephony network.

4. Method according to one of Claims 1 to 3, **characterized in that** several terminals (5) simultaneously access voice or telematics services via a concentrator (11) provided in the communication device (1) and via the connection set up by this device with the mobile telephony network (2).

5. Method according to one of Claims 1 to 4, **characterized in that** the connection between the communication device (1) and the mobile telephony network (2) is maintained for as long as a wireless communication is set up between the communication terminal (10) and the communication device (1).

6. Method according to one of Claims 1 to 5, **characterized in that** it comprises a pairing step conducted if the communication terminal (10) has never been paired with the communication device (1), and an automatic authentication step using a session number obtained during a previous connection if the communication terminal has already been paired with the communication device (1).

7. Communication device (1) to manage access to voice or telematics services via a mobile telephony network (2), the communication device comprising:
- wireless communication means associated with means for detecting within radio range communication terminals (10) equipped with authentication means for connecting to a mobile telephony network (2),
- means for setting up a wireless communication with a communication terminal (10), and
- means for setting up a connection with the mobile telephony network using the means of authentication of the communication terminal with which a wireless connection has been set up, and
- means for simultaneously setting up a wireless communication with a terminal (5) in order to allow it access to voice or telematics services via the connection set up with the mobile telephony network,
**characterized in that** it further comprises:
- means for determining which communication terminal (10) is to be used for accessing the mobile telephony network (2), by polling the user of the communication terminal being used to access the mobile telephony network (2), and
- means for determining, by polling the user of the communication terminal (10), whether the terminal (5) is authorized to access the voice or telematics services, and refusing access to the voice or telematics services if the terminal has no authorization.

8. Device according to Claim 7, **characterized in that** it comprises a concentrator (11) to set up a communication with several terminals (5) simultaneously to allow them access to voice or telematics services via the connection set up with the mobile telephony network (2).

9. Device according to Claims 7 to 8, **characterized in that** it comprises a display (16) to display the list of terminals (5, 10) detected within radio range, and means for determining for each detected terminal whether it is equipped with authentication means to access the mobile telephony network (2).

10. Computer program able to be executed by a communication device (1) provided with wireless communication means and with means for connecting to a mobile telephony network (2), **characterized in that** it implements the method according to one of Claims 1 to 6.

## Patentansprüche

1. Verfahren zur Verwaltung des Zugriffs auf Telematik- oder Sprachdienste über ein Mobiltelefonnetz (2), das Schritte aufweist, während denen:
- eine mit drahtlosen Kommunikationsmitteln ausgestattete Kommunikationsvorrichtung (1) im Funkbereich Kommunikationsendgeräte (10) erfasst, die mit Authentifizierungsmitteln versehen sind, um sich mit einem Mobiltelefonnetz (2) zu verbinden,
- die Kommunikationsvorrichtung eine drahtlose Kommunikation mit einem Kommunikationsendgerät (10) aufbaut und Authentifizierungsmittel des Kommunikationsendgeräts verwendet, um eine Verbindung mit dem Mobiltelefonnetz aufzubauen, und
- mindestens ein Endgerät (5) über die Kommunikationsvorrichtung und die von dieser mit dem Mobiltelefonnetz aufgebaute Verbindung auf Telematik- oder Sprachdienste zugreift,
**dadurch gekennzeichnet, dass** es weiter Schritte aufweist, während denen:
- die Kommunikationsvorrichtung (1) ein für den Zugriff auf das Mobiltelefonnetz zu verwendendes Kommunikationsendgerät (10) auswählt, indem sie den Benutzer des ausgewählten Kommunikationsendgeräts abfragt, und
- die Kommunikationsvorrichtung, indem sie den Benutzer des Kommunikationsendgeräts abfragt, bestimmt, ob das Endgerät (5) berechtigt ist, auf die Telematik- oder Sprachdienste zuzugreifen, und den Zugriff auf die Telematik- oder Sprachdienste verweigert, wenn das Endgerät nicht berechtigt ist.

2. Verfahren nach Anspruch 1, **dadurch gekennzeichnet, dass** die Kommunikationsvorrichtung (1) eine Liste von Kennungen der Endgeräte (5, 10) liefert, die im Funkbereich erfasst wurden, die anzeigt, welches die Endgeräte (10) sind, die mit Authentifizierungsmitteln ausgestattet sind, um sich mit dem Mobiltelefonnetz (2) zu verbinden, um es dem Benutzer zu ermöglichen, ein Endgerät (10) auszuwählen, dessen Authentifizierungsmittel zu verwenden sind, um sich mit dem Mobiltelefonnetz zu verbinden.

3. Verfahren nach Anspruch 2, **dadurch gekennzeichnet, dass** die Liste von Kennungen der Endgeräte (5, 10), die im Funkbereich erfasst wurden, verwendet wird, um es dem Benutzer des Kommunikationsendgeräts, das verwendet wird, um auf das Mobiltelefonnetz (2) zuzugreifen, zu ermöglichen, mindestens ein Endgerät (5) auszuwählen, das berechtigt ist, über die mit dem Mobiltelefonnetz aufgebaute Verbindung auf die Telematik- oder Sprachdienste zuzugreifen.

4. Verfahren nach einem der Ansprüche 1 bis 3, **dadurch gekennzeichnet, dass** mehrere Endgeräte (5) gleichzeitig über einen in der Kommunikationsvorrichtung (1) vorgesehenen Konzentrator (11) und über die von diesem mit dem Mobiltelefonnetz (2) aufgebaute Verbindung auf Telematik- oder Sprachdienste zugreifen.

5. Verfahren nach einem der Ansprüche 1 bis 4, **dadurch gekennzeichnet, dass** die Verbindung zwischen der Kommunikationsvorrichtung (1) und dem Mobiltelefonnetz (2) aufrechterhalten wird, so lange eine drahtlose Kommunikation zwischen dem Kommunikationsendgerät (10) und der Kommunikationsvorrichtung (1) aufgebaut ist.

6. Verfahren nach einem der Ansprüche 1 bis 5, **dadurch gekennzeichnet, dass** es einen Schritt der Paarbildung, der ausgeführt wird, wenn das Kommunikationsendgerät (10) nie mit der Kommunikationsvorrichtung (1) gepaart wurde, und einen Schritt der automatischen Authentifizierung aufweist, der eine Sitzungsnummer anwendet, die bei einer vorhergehenden Verbindung erhalten wurde, wenn das Kommunikationsendgerät bereits mit der Kommunikationsvorrichtung (1) gepaart wurde.

7. Kommunikationsvorrichtung (1) zur Verwaltung des Zugriffs auf Telematik- oder Sprachdienste über ein Mobiltelefonnetz (2), wobei die Kommunikationsvorrichtung aufweist:
- drahtlose Kommunikationsmittel, die Mitteln zugeordnet sind, um im Funkbereich Kommunikationsendgeräte (10) zu erfassen, die mit Authentifizierungsmitteln ausgestattet sind, um sich mit einem Mobiltelefonnetz (2) zu verbinden,
- Mittel, um eine drahtlose Kommunikation mit einem Kommunikationsendgerät (10) aufzubauen, und
- Mittel, um unter Verwendung der Authentifizierungsmittel des Kommunikationsendgeräts, mit dem eine drahtlose Verbindung aufgebaut ist, eine Verbindung mit dem Mobiltelefonnetz aufzubauen, und
- Mittel, um gleichzeitig eine drahtlose Verbindung mit einem Endgerät (5) aufzubauen, um ihm über die mit dem Mobiltelefonnetz aufgebaute Verbindung Zugriff zu Telematik- oder Sprachdiensten zu gewähren,
**dadurch gekennzeichnet, dass** sie außerdem aufweist:
- Mittel, um ein Kommunikationsendgerät (10) zu bestimmen, das für den Zugriff auf das Mobiltelefonnetz (2) zu verwenden ist, unter Abfrage des Benutzers des Kommunikationsendgeräts, das verwendet wird, um auf das Mobiltelefonnetz (2) zuzugreifen, und
- Mittel, um unter Abfrage des Benutzers des Kommunikationsendgeräts (10) zu bestimmen, ob das Endgerät (5) berechtigt ist, auf die Telematik- oder Sprachdienste zuzugreifen, und um den Zugriff auf die Telematik- oder Sprachdienste zu verweigern, wenn das Endgerät nicht berechtigt ist.

8. Vorrichtung nach Anspruch 7, **dadurch gekennzeichnet, dass** sie einen Konzentrator (11) aufweist, um gleichzeitig eine Kommunikation mit mehreren Endgeräten (5) aufzubauen, um ihnen über die mit dem Mobiltelefonnetz (2) aufgebaute Verbindung Zugriff zu Telematik- oder Sprachdiensten zu gewähren.

9. Vorrichtung nach einem der Ansprüche 7 bis 8, **dadurch gekennzeichnet, dass** sie eine Anzeigevorrichtung (16) aufweist, um die Liste der im Funkbereich erfassten Endgeräte (5, 10) anzuzeigen und für jedes erfasste Endgerät zu bestimmen, ob es mit Authentifizierungsmitteln versehen ist, um auf das Mobiltelefonnetz (2) zuzugreifen.

10. Computerprogramm, das ausgelegt ist, um von einer Kommunikationsvorrichtung (1) ausgeführt zu werden, die mit drahtlosen Kommunikationsmitteln und mit Mitteln versehen ist, um sich mit einem Mobiltelefonnetz (2) zu verbinden, **dadurch gekennzeichnet, dass** es das Verfahren nach einem der Ansprüche 1 bis 6 anwendet.
